# EUROPÄISCHE PATENTSCHRIFT

(11) **EP 2 257 844 B1**
(45) Veröffentlichungstag und Bekanntmachung des Hinweises auf die Patenterteilung: **26.07.2017**
(21) Anmeldenummer: 09721799.6
(22) Anmeldetag: 17.03.2009
(51) Int. Cl.: G02B 7/18, G02B 26/06

(54) **ADAPTIVER SPIEGEL UND VERFAHREN ZU DESSEN HERSTELLUNG**
ADAPTIVE MIRROR AND METHOD FOR THE PRODUCTION THEREOF
MIROIR ADAPTATIF ET PROCÉDÉ DE FABRICATION DUDIT MIROIR

(30) Priorität: 17.03.2008 DE 102008014619
(43) Veröffentlichungstag der Anmeldung: 08.12.2010
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: BRUCHMANN, Claudia, 07745 Jena (DE); BECKERT, Erik, 99310 Arnstadt (DE); PESCHEL, Thomas, 07743 Jena (DE); DAMM, Christoph, 07743 Jena (DE)
(74) Vertreter: Pfenning, Meinig & Partner mbB
(86) Internationale Anmeldenummer: PCT/EP2009/001968
(87) Internationale Veröffentlichungsnummer: WO 2009/115303

(56) Entgegenhaltungen:
- EP-A- 1 227 353
- WO-A-2006/046078
- WO-A2-02/50888
- DE-A1- 19 609 784

## Beschreibung

Die Erfindung betrifft einen adaptiven Spiegel auf Basis eines keramischen Substrates mit entsprechendem Reflektor und piezoelektrischen Aktoren, wobei in das Substrat eine Kühlvorrichtung integriert ist. Ebenso betrifft die Erfindung ein Verfahren zur Herstellung derartiger Spiegel. Verwendung finden die erfindungsgemäßen Spiegel für die Modulation bzw. Verformung einer Laserwellenfront hoher Leistung.

Eine Lösung zur Modulation einer Laserwellenfront hoher Leistungen mit Hilfe eines adaptiven Spiegels wurde von A.V. Ikramov entwickelt. A.V. Ikramov et al., "Bimorph adaptive mirror", Sov. J. Quantum Electron. 22(2), Feb. 1992 beschreibt einen gekühlten adaptiven Spiegel, der aus einer Substratplatte (Kupfer) und einer reflektiven Scheibe auf der Substratoberseite und zwei piezoelektrischen Scheiben auf der Unterseite besteht.

Die Substratplatte weist Kühlkanäle mit Kühlflüssigkeit auf und fungiert so als Kühlplatte. Die untere der zwei piezoelektrischen Scheiben ist in einen äußeren und einen inneren Ring untergliedert, während die obere der beiden Scheiben in 17 Teile untergliedert ist und kontaktiert wurde. Durch die Kühlung und die untere piezoelektrische Scheibe kann die Initialposition der Spiegelfläche stabilisiert und die thermische Durchbiegung, die durch den hohen Leistungseintrag der reflektierten Strahlung hervorgerufen wird, kompensiert werden. Die obere piezoelektrische Scheibe kompensiert die Verformungen der Wellenfront höherer Ordnung.

Die Kühlung bestand bislang lediglich aus metallischen Substraten, wie Kupfer oder Wolfram. So beschreibt die WO 02/35274 A1 einen Spiegel insbesondere für Hochleistungslaser mit einer Verstelleinrichtung, um die Spiegelkrümmung zu korrigieren, und mit einer Kühleinrichtung, die mit spanabhebenden Verfahren hergestellt wurde und sich nahe der Wärmeeinbringung befinden soll. Die Zu- und Ableitung des Kühlmediums erfolgt über die Stege der Spiegelaufhängung. Die Aktoren wirken entweder punktuell oder flächig, aber in jedem Fall senkrecht zur Spiegelfläche. Das Schutzrecht US 000004674848 A wurde auch für den Einsatz als Laserspiegel konzipiert und weist piezoelektrische Stackaktoren auf, die senkrecht zur Spiegelfläche wirken.

Die EP 07 93 120 A1 beschreibt einen adaptiven Bimorphspiegel für den Einsatz in Lasersystemen und in astronomischen Teleskopen. Das Spiegelsubstrat und die Spiegelfassung sind aus einem Stück gefertigt, wobei die Höhe der Aufhängung des Spiegels in Nähe der Einspannung abgedünnt ist und so eine Sollbiegestelle aufweist, die auch noch zusätzlich strukturiert sein kann. Der Spiegelfassung kann als Wärmesenke funktionieren und so die Spiegelmembran kühlen. Die WO2006/046078 beschreibt einen adaptiven Spiegel enthaltend ein keramisches Substrat mit einer Kühlvorrichtung gemäß dem Stand der Technik. Diesen aus dem Stand der Technik bekannten Systemen haftet der Nachteil an, dass mit der Verwendung von metallischen Substraten ein hoher Fertigungsaufwand verbunden ist. So besitzen Metalle, insbesondere Kupfer, zwar eine gute thermische Leitfähigkeit, allerdings besitzen sie auch eine hohe thermische Eigenausdehnung. Nachteilig ist außerdem, dass durch die große Substrathöhe die Wirkung der piezoelektrischen Aktoren abgeschwächt werden kann.

Ausgehend hiervon war es Aufgabe der vorliegenden Erfindung, adaptive Spiegel bereitzustellen, die die Nachteile des Standes der Technik überwinden und eine gute Eignung hinsichtlich der Modulation von Laserwellenfronten zeigen. Gleichzeitig sollen derartige Spiegel einfach herstellbar sein.

Diese Aufgabe wird durch den adaptiven Spiegel mit den Merkmalen des Anspruchs 1 und das Verfahren zu dessen Herstellung mit den Merkmalen des Anspruchs 17 gelöst. Die weiteren abhängigen Ansprüche zeigen vorteilhafte Weiterbildungen auf. Anspruch 22 nennt eine erfindungsgemäße Verwendung.

Erfindungsgemäß wird ein adaptiver Spiegel bereitgestellt, der ein keramisches Substrat, mindestens einen auf der Vorderseite des Substrates angeordneten Reflektor, der in optischer Qualität strukturiert ist, sowie mindestens einen auf der Rückseite des Substrates angeordneten piezoelektrischen Aktor aufweist. Der erfindungsgemäße adaptive Spiegel weist dabei mindestens eine Kühlvorrichtung auf, die in das Substrat integriert ist oder auf einer der Oberflächen des Substrates angeordnet ist. In letzterem Fall kann die Kühlvorrichtung oder Kühlstruktur dann zwischen dem Substrat und dem Reflektor und/oder zwischen dem Substrat und den piezoelektrischen Aktoren angeordnet sein. Der erfindungsgemäße adaptive Spiegel weist dabei mindestens eine LTCC-Schicht auf, die zwischen dem piezoelektrischen Aktor und dem Substrat angeordnet ist, die eine Strukturierung zum Transport eines Kühlmittels aufweist. Vorzugsweise weist das Substratmaterial eine maximale thermische Ausdehnung von 2*10⁻⁶ bis 10*10⁻⁶ K auf. Vorzugsweise wird als Substratmaterial eine Niedertemperatur-Einbrand-Keramik (engl.: Low Temperature Co-fired Ceramic, LTCC) eingesetzt. Mit der Verwendung von LTCC-Materialien können Multilayer-Strukturen bereitgestellt werden, die durch kostengünstige Batch-Prozesse gefertigt werden können. Weiterhin bietet LTCC den Vorteil, dass die Spiegel monolithisch aufgebaut werden können.

Vorzugsweise werden unterschiedliche Glaskeramiken verwendet, wie beispielsweise Niedertemperatur-Einbrand-Keramiken (LTCC), Aluminiumoxidkeramiken (Al₂O₃), Aluminiumnitridkeramiken (AlN), Zirkonoxid (ZrO₂), Cordieritwerkstoffe und darauf basierende Varianten mit niedrigen thermischen Ausdehnungskoeffizienten, Titanium-Silikatglas, wie beispielsweise ULE und weitere Glaskeramiken mit sehr niedrigen thermischen Ausdehnungskoeffizienten, wie beispielsweise Clearceram-Z der Firma Ohara, Zerodur der Firma Schott AG und/oder Astrosital. Hinsichtlich der Zusammensetzung von Clearceram-Z wird auf die US 5,591,682 verwiesen, und deren diesbezüglicher Offenbarungsgehalt übernommen. Unter Niedertemperatur-Einbrand-Keramiken sind beispielsweise Grünfolien bestehend aus Al₂O₃ mit einem Glasanteil bis zu 50 % und organischen Bindern, die aufeinander laminiert und anschließend gesintert sind, zu verstehen. Als Cordieritwerkstoffe kommen Low CTE Cordierite™ in Frage. Darauf basierend können beispielsweise Magnesiumaluminiumsilikate mit der vereinfachten Näherung der Zusammensetzung von reinem keramischem Cordierit, das definierte Anteile an MgO, Al₂O₃ und SiO₂ enthält, verwendet werden. Die Anteile können beispielsweise zu 14 % MgO, 35 % Al₂O₃ und 51 % SiO₂ aufgeteilt sein.

Ebenso können DCB-Substrate (Direct Copper Bonded) als Substratschicht Verwendung finden. Dabei handelt es sich um Materialien, die bereits auf ihrer Vordersowie auf ihrer Rückseite metallisiert sind. So kann z.B. auf eine Aluminiumoxidkeramik und/oder eine Aluminiumnitridkeramik eine Kupferschicht gebondet sein. Solche Produkte können von der Firma Electrovac curamik GmbH bezogen werden. Die Metallisierung kann später als Spiegelschicht und/oder als Elektrode für die Aktoren dienen.

Vorzugsweise besteht der piezoelektrische Aktor aus einer Dickschicht, die als piezoelektrischer Einzel- oder Multilayer aufgebracht sein kann. Ebenso ist es möglich, dass eine oder mehrere piezoelektrische Scheiben als Aktoren am Substrat befestigt sind. Die Metallisierung auf der Vorderseite ist eine Dickschicht, die mittels Siebdruck, über chemische Metallabscheidung oder galvanische Abscheidung aufgebracht wurde. Das aufgebrachte Metall kann beispielsweise aber nicht ausschließlich Kupfer, Nickel, Silber oder deren Legierungen sein.

Bei den erfindungsgemäßen piezoelektrischen Aktoren wirkt die mechanische Kraft nicht parallel zum angelegten Feld und damit longitudinal, sondern transversal. Dies bedeutet, dass die Aktoren entlang der Membranebene wirken. Erfindungsweise ist zwischen dem piezoelektrischen Aktor und dem Substrat mindestens eine LTCC-Schicht angeordnet, die eine Strukturierung zum Transport einer Kühlflüssigkeit aufweist. Dies ist z.B. in der Weise realisierbar, dass zwischen dem piezoelektrischen Aktor und dem Substrat eine strukturierte und eine nicht strukturierte LTCC-Schicht eingefügt sind. Das durch die Strukturierung frei bleibende Volumen kann dann beispielsweise für den Transport eines Kühlmediums genutzt werden oder wenn ein Kühlmedium transportiert wird als zusätzliche thermische Barriere dienen. Im zweiten Fall können beispielsweise zylinderförmige Kavitäten mit der Höhe einer Lage LTCC ausgeführt sein. Dafür werden im Grünzustand Löcher mit einem Durchmesser von 150 µm in die Folie gestanzt und mit der oberen und unteren Abdeckung aus LTCC zusammengesintert. Anschließend werden auf der Vorder- und Rückseite Metallisierungen beispielsweise über Siebdruckprozesse aufgebracht. Dabei dient die Metallisierung auf der Rückseite als Grundelektrode für die nachfolgend aufgedruckte PZT-Keramik und die Metallisierung auf der Vorderseite entweder als Startschicht für die chemische Abscheidung von Metallen (beispielsweise Cu oder NiP) oder deren Legierungen, oder es wird eine Metallisierung siebgedruckt. Dafür kann beispielsweise Kupfer, Silber oder Gold genutzt werden.

Die Kühlkanäle können dabei offen sein oder auch an einem geschlossenen Kühlkreislauf angeschlossen sein. Ebenso ist es möglich, dass als Kühlstrukturen geschlossene Röhren oder Kavitäten in Form von Heat-Pipes vorliegen.

Wird hingegen ein Kühlmedium, vorzugsweise eine Kühlflüssigkeit oder ein Kühlgas, transportiert, wird die Mittellage LTCC so gestanzt, dass durch die Kombination mit der oberen und unteren Abdeckung ein Kanalsystem gebildet wird, durch welches das Kühlmedium fließt oder strömt. Das Kanalsystem kann dabei beispielsweise in Form einer Doppelspirale oder in Form eines Sterns ausgeführt sein.

Eine weitere erfindungsgemäße Variante sieht vor, dass in das Substrat mindestens eine Bohrung zur Wärmeableitung, sog. Thermal Vias, eingebracht werden, wodurch die Temperatur auf der Substratvorder- und -rückseite abtransportiert werden kann, wodurch die Temperatur beispielsweise von der Substratvorderseite auf die Substratrückseite transportiert werden kann (Fig. 1A), Kupfer beispielsweise weist eine Wärmeleitfähigkeit von 391 W/(mW) und Nickel-Phosphor-Legierungen eine Wärmeleitfähigkeit von 40 bis 100 W/(mK) auf. Dadurch wird die Temperatur schneller auf der reflektiven Vorderseite abtransportiert. Die wärmeleitende Schicht auf der Vorderseite kann dabei auch als Reflektor dienen und auf der Rückseite kann sie als untere Elektrode dienen.

Die Thermal Vias weisen vorzugsweise einen Durchmesser von 100 bis 175 µm auf und sind in einem Abstand zueinander von 100 bis 200 µm angeordnet. Diese besitzen dann eine thermische Leitfähigkeit von etwa 20 (W/mK). Der Durchmesser der Thermal Vias kann aber auch in Sonderfällen auf 260 bis 440 µm erhöht werden.

Eine andere erfindungsgemäße Ausführungsform sieht vor, dass zwischen Substrat und piezoelektrischem Aktor und/oder zwischen Substrat und Reflektorschicht eine thermisch leitfähige Schicht angeordnet ist, die mit einer Wärmesenke in Verbindung steht. Diese thermisch leitfähige Schicht kann beispielsweise aus Kupfer, Molybdän oder Wolfram bestehen.

In einer weiteren Ausführungsvariante wird die Metallisierung der Substratvorderseite über Thermal Vias mit dem Kühlmedium verbunden und sorgt so für einen schnelleren Abtransport der Wärme. Die Thermal Vias können auch die reflektive Vorderseite (beispielsweise Kupfer-Metallisierung) mit einer inneren Metallisierung auf einem unteren LTCC-Layer verbinden und so die Wärme schneller abtransportieren. Auf der Vorder- und Rückseite der Multilayerstruktur werden über Siebdruckprozesse weitere Metallisierungen aufgebracht. Dabei dient die Metallisierung auf der Rückseite als Grundelektrode für die nachfolgend aufgedruckte PZT-Keramik und die Metallisierung auf der Rückseite als Grundelektrode für die nachfolgend aufgedruckte PZT-Keramik und die Metallisierung auf der Vorderseite entweder als Startschicht für die chemische Abscheidung von Metallen (beispielsweise Cu oder NiP) oder deren Legierungen, oder es wird eine Metallisierung siebgedruckt. Dafür kann beispielsweise Kupfer, Nickel-Phosphor, Silber oder Gold genutzt werden.

Es ist weiter bevorzugt, dass die piezoelektrischen Aktoren an ihren frei zugänglichen Oberflächen eine erste Elektrode aufweisen. Zusätzlich befindet sich auf der dem Substrat zugewandten Oberfläche eine zweite Elektrode, sog. Grundelektrode, die bevorzugt flächig ausgeführt ist und so eine elektrische Verbindung der Aktoren bewirken kann.

Vorzugsweise ist auf der Vorderseite des Substrates eine metallische Startschicht abgeschieden, auf der dann eine Dickschicht galvanisch oder chemisch aufwächst. Die Abscheidungstemperatur liegt dabei vorzugsweise im Bereich von 20 bis 100 °C und führt bei Abkühlung der Schicht auf Raumtemperatur, zu einer thermisch bedingten konkaven Verformung. Bevor diese Schicht mit einer hochreflektiven Multilayerschicht beschichtet wird, wird die galvanische Schicht mittels Diamantbearbeitung in optischer Qualität strukturiert. Die Strukturierung ist dabei so abgestimmt, dass die aufgrund des erwarteten Leistungseintrags eintretende Verformung des adaptiven Spiegels durch die bearbeitete Oberflächengeometrie vorkompensiert ist. Trifft Leistung auf den Spiegel und wird absorbiert, verformt sich der Spiegel so, dass die Spiegelfläche plan wird. Die piezoelektrischen Aktoren können nun die Verformungen der Wellenfront höherer Ordnung kompensieren.

Das Substrat kann vorzugsweise als Mehrlagenstruktur aufgebaut sein. Hieraus ergibt sich eine Vielzahl von Möglichkeiten der Funktionsintegration. So können beispielsweise mechanische Spiegelfassungen aus dem Substratmaterial über eine kraftschlüssige Verbindung zwischen den Teilmembranen generiert werden. Ebenso ist es möglich, elektrische Versorgungseinheiten und thermomechanische Strukturen über eine kraftschlüssige Verbindung zwischen den einzelnen Lagen in das Substrat zu integrieren. Für die Integration weiterer Funktionen werden die einzelnen Layer des LTCC-Substrates strukturiert und kraftschlüssig verbunden.

Erfindungsgemäß wird ebenso ein Verfahren zur Herstellung eines adaptiven Spiegels, wie er zuvor beschrieben wurde, bereitgestellt, bei dem auf der Rückseite des keramischen Substrats mindestens ein piezoelektrischer Aktor angeordnet und kraftschlüssig verbunden wird und die Aktoren elektrisch kontaktiert werden. Auf der Vorderseite des keramischen Substrats erfolgt eine Abscheidung mindestens einer Reflektorschicht, wobei mindestens eine Kühlvorrichtung in das Substrat integriert wird oder auf einer der Oberflächen des Substrats angeordnet wird.

Vorzugsweise wird vor der Abscheidung der mindestens einen Reflektorschicht auf der Vorderseite des keramischen Substrats zunächst eine metallische Startschicht abgeschieden, auf der dann eine Dickschicht mit einer Dicke im Bereich von 30 bis 100 µm galvanisch oder chemisch aufwächst.

Diese galvanisch oder chemisch abgeschiedene Schicht wird durch Diamantbearbeitung bevorzugt in optischer Qualität strukturiert.

In einer weiteren Ausführungsvariante wird auf der Vorderseite über wiederholtes Siebdrucken eine metallische Schicht mit einer Dicke im Bereich von 15 bis 100 µm abgeschieden.

Die Metallisierung auf Vorder- und Rückseite können entweder im Grünzustand oder im gesinterten Zustand des keramischen Substrats beispielsweise durch Siebdruck aufgebracht werden. Dabei können die Metallisierungen beispielsweise aber nicht ausschließlich aus Gold, Silber, Kupfer und Legierungen hiervon bestehen oder diese enthalten.

Ein weiteres Verfahren zur Aufbringung der Metallisierungen ist das Bonden.

Die Metallisierung zwischen zwei LTCC-Lagen besitzt im Grünzustand vorzugsweise eine Schichtdicke von etwa 10 µm, während die Metallisierungen auf Vorder- und Rückseite auch deutlich höhere Schichtdicken, z.B. bis etwa 100 µm, aufweisen können. Metallisierungen auf der Vorderseite mit vorzugsweise maschinell, z.B. durch Schleifen oder Drehen, nachbearbeitet, um die Unebenheit der Substrate auszugleichen.

Die thermischen Vias werden bevorzugt gestanzt und vorzugsweise mit Silber, Palladium, Gold oder Legierungen hiervon gefüllt und über das metallisierte LTCC-Substrat gelegt und gesintert. Es können weiterhin zusätzliche Lagen LTCC hinzugefügt werden.

Die Kühlkanäle werden vorzugsweise dadurch gefertigt, dass diese aus einem LTCC-Layer gestanzt werden und mit je einem Abdeckungslayer über und unter dieser Schicht versintert werden. Die dadurch gebildete Kavität wird an ein Kühlmedium angeschlossen und erhöht somit die Wärmeleitfähigkeit für die Multilayerstruktur.

Verwendung findet der beschriebene adaptive Spiegel zur Modulation bzw. Verformung von Laserwellenfronten hoher Leistung, z.B. eines Hochleistungslasers.

## Patentansprüche

1. Adaptiver Spiegel enthaltend ein keramisches Substrat, mindestens einen auf der Vorderseite des Substrats angeordneter Reflektor sowie mindestens einen auf der Rückseite des Substrats angeordneten piezoelektrischen Aktor, wobei mindestens eine Kühlvorrichtung in das Substrat integriert oder auf einer der Oberflächen des Substrats angeordnet ist,
**dadurch gekennzeichnet, dass** zwischen dem piezoelektrischen Aktor und dem Substrat mindestens eine LTCC-Schicht angeordnet ist, die eine Strukturierung zum Transport eines Kühlmittels aufweist.

2. Adaptiver Spiegel nach Anspruch 1,
**dadurch gekennzeichnet, dass** das Substratmaterial eine maximale thermische Ausdehnung von 2_{*}10⁻⁶ bis 10*10⁻⁶ /K aufweist, wobei das Substratmaterial insbesondere Glaskeramiken wie LTCC-Keramiken, Aluminiumoxidkeramik (Al₂O₃), Aluminiumnitridkeramik (AlN), Grünfolien aus Al₂O₃-Pulver und organischen Bindern, Zirkonoxid (ZrO₂), Cordieritwerkstoffe, Clearceram-Z, oder Astrosital, Titanium-Silikatglas und Lithium-Aluminosilikat-Glaskeramiken enthält oder aus einem oder mehreren dieser Materialien besteht.

3. Adaptiver Spiegel nach einem der vorhergehenden Ansprüche,
**dadurch gekennzeichnet, dass** der piezoelektrische Aktor aus mindestens einer Dickschicht mit einer Dicke im Bereich von 15 bis 150 µm oder mindestens einer piezoelektrischen Scheibe besteht.

4. Adaptiver Spiegel nach einem der vorhergehenden Ansprüche,
**dadurch gekennzeichnet, dass** der Spiegel als Kühlvorrichtung Kühlkanäle aufweist, die an einen geschlossenen Kühlmittelkreislauf angeschlossen sind.

5. Adaptiver Spiegel nach einem der vorhergehenden Ansprüche,
**dadurch gekennzeichnet, dass** das Kühlmittel eine Kühlflüssigkeit oder ein Kühlgas ist.

6. Adaptiver Spiegel nach einem der vorhergehenden Ansprüche,
**dadurch gekennzeichnet, dass** das Substrat mindestens eine Bohrung zur Wärmeableitung aufweist.

7. Adaptiver Spiegel nach einem der vorhergehenden Ansprüche,
**dadurch gekennzeichnet, dass** zwischen Substrat und piezoelektrischem Aktor und/oder zwischen Substrat und Reflektorschicht eine thermisch leitfähige, mit einer Wärmesenke in Verbindung stehende Schicht angeordnet ist.

8. Adaptiver Spiegel nach einem der vorhergehenden Ansprüche,
**dadurch gekennzeichnet, dass** die piezoelektrischen Aktoren an ihren frei zugänglichen Oberflächen eine erste Elektrode und an dem Substrat zugewandten Oberfläche eine zweite Elektrode, die bevorzugt flächig ausgeführt ist und so eine elektrische Verbindung der Aktoren bewirkt, aufweisen.

9. Adaptiver Spiegel nach einem der vorhergehenden Ansprüche,
**dadurch gekennzeichnet, dass** der Reflektor aus einer reflektiven Multilayerschicht, einem reflektiven Metallspiegel, einem reflektiven Metallspiegel mit einer zusätzlichen Multilayerschicht, die den Reflektionsgrad erhöht und den Absorptionsgrad senkt, oder aus einem reflektiven Metallspiegel mit einer zusätzlichen dielektrischen Schicht, die den Reflektionsgrad erhöht und den Absorptionsgrad senkt, besteht.

10. Adaptiver Spiegel nach einem der vorhergehenden Ansprüche,
**dadurch gekennzeichnet, dass** zwischen Substrat und Reflektor eine auf dem Substrat abgeschiedenen metallischen Startschicht und eine galvanisch oder chemisch abgeschiedenen Dickschicht mit einer Dicke im Bereich von 5 bis 100 µm angeordnet sind, wobei die galvanisch abgeschiedene Dickschicht insbesondere mittels Diamantbearbeitung in optischer Qualität strukturiert ist.

11. Verfahren zur Herstellung eines adaptiven Spiegels nach einem der vorhergehenden Ansprüche, bei dem auf der Rückseite des keramischen Substrats mindestens ein piezoelektrischer Aktor angeordnet und kraftschlüssig verbunden wird, die Aktoren elektrisch kontaktiert werden und auf der Vorderseite des keramischen Substrats eine Abscheidung mindestens einer Reflektorschicht erfolgt, wobei mindestens eine Kühlvorrichtung in das Substrat integriert wird, indem die Kühlstrukturen aus der LTCC-Schicht gestanzt und mit je einer Abdeckungsschicht über und unter der LTCC-Schicht versintert werden.

12. Verfahren nach Anspruch 11,
**dadurch gekennzeichnet, dass** die Abscheidung bei Temperaturen von 20 bis 100 °C erfolgt und bei Abkühlung des Spiegels auf Raumtemperatur eine konkave Verformung des Spiegels auftritt.

13. Verfahren nach einem der Ansprüche 11 oder 12,
**dadurch gekennzeichnet, dass** das keramische Substrat aus mehreren Lagen gebildet wird, wobei zwischen den Lagen mechanische Spiegelfassungen und/oder elektronische Versorgungseinheiten integriert werden.

14. Verwendung des adaptiven Spiegels nach einem der Ansprüche 1 bis 10 zur Modulation einer Laserwellenfront eines Hochleistungslasers.

## Claims

1. Adaptive mirror comprising a ceramic substrate, at least one reflector which is disposed on the front-side of the substrate and also at least one piezoelectric actuator which is disposed on the rear-side of the substrate, at least one cooling device being integrated in the substrate or disposed on one of the surfaces of the substrate,
**characterised in that**
there is disposed between the piezoelectric actuator and the substrate, at least one LTCC layer which has a structuring for transporting a cooling liquid.

2. Adaptive mirror according to claim 1,
**characterised in that** the substrate material has a maximum thermal expansion of 2*10⁻⁶ to 10*10⁻⁶/K wherein the substrate material in particular comprises glass ceramics, such as LTCC ceramics, aluminium oxide ceramic (Al₂O₃), aluminium nitride ceramic (AIN), green foils made of Al₂O₃ powder and organic binders, zirconium oxide (ZrO₂), cordierite materials, Clearceram-Z or Astrosital, titanium silicate glass and lithium-aluminosilicate glass ceramics or consists of one or more of these materials.

3. Adaptive mirror according to die preceding claim,
**characterised in that** the piezoelectric actuator consists of at least one thick layer having a thickness in the range of 15 to 150 µm or at least one piezoelectric disc.

4. Adaptive mirror according to one of the preceding claims,
**characterised in that** the mirror has cooling channels as cooling device which are connected to a closed cooling medium circulation.

5. Adaptive mirror according to one of the preceding claims,
**characterised in that** the cooling medium is a cooling liquid or a cooling gas.

6. Adaptive mirror according to one of the preceding claims,
**characterised in that** the substrate has at least one boring for heat dissipation.

7. Adaptive mirror according to one of the preceding claims,
**characterised in that** there is disposed between substrate and piezoelectric actuator and/or between substrate and reflector layer, a thermally conductive layer in communication with a heat sink.

8. Adaptive mirror according to one of the preceding claims,
**characterised in that** the piezoelectric actuators have, on their freely accessibly surfaces, a first electrode and, on the surface orientated towards the substrate, a second electrode which preferably has a planar configuration and thus effects an electrical connection of the actuators.

9. Adaptive mirror according to one of the preceding claims,
**characterised in that** the reflector consists of a reflective multilayer, a reflective metal mirror, a reflective metal mirror with an additional multilayer which increases the degree of reflection and lowers the degree of absorption or a reflective metal mirror with an additional dielectric layer which increases the degree of reflection and lowers the degree of absorption.

10. Adaptive mirror according to one of the preceding claims,
**characterised in that** there is disposed between substrate and reflector, a metallic starter layer deposited on the substrate and a galvanically or chemically deposited thick layer having a thickness in the range of 5 to 100 µm wherein the galvanically deposited thick layer is particularly structured by means of diamond machining in optical quality.

11. Method for the production of an adaptive mirror according to one of the preceding claims, in which, on the rear-side of the ceramic substrate, at least one piezoelectric actuator is disposed and connected frictionally, the actuators are contacted electrically and, on the front-side of the ceramic substrate, a deposition of at least one reflector layer is effected, at least one cooling device being integrated in the substrate by stamping the cooling structures out of an LTCC layer and sintering them with respectively one cover layer above and below the LTCC layer.

12. Method according to claim 11,
**characterised in that** the deposition is effected at temperatures from 20 to 100°C and, during cooling of the mirror to room temperature, a concave deformation of the mirror occurs.

13. Method according to one of the claims 11 or 12,
**characterised in that** the ceramic substrate is formed from a plurality of layers, wherein mechanical mirror frames and/or electronic supply units are integrated between the layers.

14. Use of the adaptive mirror according to one of the claims 1 to 10 for the modulation of a laser wavefront of a high power laser.

## Revendications

1. Miroir adaptatif comprenant un substrat céramique, au moins un réflecteur disposé sur le côté avant du substrat ainsi qu'au moins un actionneur piézoélectrique disposé sur le côté arrière du substrat, au moins un dispositif de refroidissement étant intégré dans le substrat ou étant disposé sur une des surfaces du substrat,
**caractérisé en ce que**,
entre l'actionneur piézoélectrique et le substrat, se trouve au moins une couche LTCC, qui présente une structuration pour le transport d'un fluide de refroidissement.

2. Miroir adaptatif selon la revendication 1, **caractérisé en ce que** le matériau du substrat présente une dilatation thermique maximale de 2*10⁻⁶à 10*10⁻⁶/ K, le matériau du substrat contenant plus particulièrement des céramiques vitreuses comme des céramiques LTCC, une céramique à oxyde d'aluminium (Al2O3), une céramique à nitrure d'aluminium (AIN), des ébauches en poudre d'Al2O3 et des liants organiques, de l'oxyde de de zircon (ZrO2), des matériaux de type cordiérite, du Clearceram-Z ou de l'astrosital, du verre silicate au titane et de céramiques vitreuses lithium-aluminosilicate ou est constitué d'un ou de plusieurs de ces matériaux.

3. Miroir adaptatif selon l'une des revendications précédentes, **caractérisé en ce que** l'actionneur piézoélectrique est constitué d'au moins une couche épaisse présentant une épaisseur de l'ordre de 15 à 150 µm ou au moins d'un disque piézoélectrique.

4. Miroir adaptatif selon l'une des revendications précédentes, **caractérisé en ce que** le miroir comprend, en tant que dispositif de refroidissement, des canaux de refroidissement, qui sont reliés à un circuit de fluide de refroidissement fermé.

5. Miroir adaptatif selon l'une des revendications précédentes, **caractérisé en ce que** le fluide de refroidissement est un liquide de refroidissement ou un gaz de refroidissement.

6. Miroir adaptatif selon l'une des revendications précédentes, **caractérisé en ce que** le substrat comprend au moins un perçage pour l'évacuation de la chaleur.

7. Miroir adaptatif selon l'une des revendications précédentes, **caractérisé en ce que**, entre le substrat et l'actionneur piézoélectrique et/ou entre le substrat et la couche de réflecteur, se trouve une couche thermo-conductrice reliée à un puits de chaleur.

8. Miroir adaptatif selon l'une des revendications précédentes, **caractérisé en ce que** les actionneurs piézoélectriques comprennent, au niveau de leurs surfaces librement accessibles, une première électrode et au niveau de la surface orientée vers le substrat, une deuxième électrode qui est conçue de préférence de manière plate et qui permet ainsi une liaison électrique des actionneurs.

9. Miroir adaptatif selon l'une des revendications précédentes, **caractérisé en ce que** le réflecteur est constitué d'une couche multicouche, d'un miroir métallique réflecteur, d'un miroir métallique réflecteur avec une couche multicouche supplémentaire, qui augmente le taux de réflexion et diminue le taux d'absorption, ou d'un miroir métallique réflecteur avec une couche diélectrique supplémentaire, qui augmente le taux de réflexion et diminue le taux d'absorption.

10. Miroir adaptatif selon l'une des revendications précédentes, **caractérisé en ce que**, entre le substrat et le réflecteur, se trouvent une couche de départ métallique déposée sur le substrat et une couche épaisseur déposée galvaniquement ou chimiquement, avec une épaisseur de l'ordre de 5 à 100 µm, la couche épaisse, déposée galvaniquement étant structurée avec une qualité optique plus particulièrement au moyen d'un usinage au diamant.

11. Procédé de fabrication d'un miroir adaptatif selon l'une des revendications précédentes, dans lequel, sur le côté arrière du substrat céramique, au moins un actionneur piézoélectrique est disposé et relié par friction, les actionneurs sont mis en contact électriquement et, sur le côté avant du substrat céramique, un dépôt d'au moins une couche réflectrice a lieu, au moins un dispositif de refroidissement étant intégré dans le substrat, grâce au fait que les structures de refroidissement sont estampées à partir de la couche LTCC et frittées avec une couche de recouvrement au-dessus et en dessous de la couche LTCC.

12. Procédé selon la revendication 11, **caractérisé en ce que** le dépôt a lieu à des températures de 20 à 100°C et, lors du refroidissement du miroir à la température ambiante, une déformation concave du miroir a lieu.

13. Procédé selon l'une des revendications 11 ou 12, **caractérisé en ce que** le substrat céramique est constitué de plusieurs couches, moyennant quoi, entre les couches, sont intégrées des montures de miroirs mécaniques et/ou des unités d'alimentation électroniques.

14. Utilisation du miroir adaptatif selon l'une des revendications 1 à 10 pour la modulation d'un front d'ondes laser d'un laser haute puissance.
